## Europäisches Patentamt

## European Patent Office

## Office européen des brevets

(19)

(11) Veröffentlichungsnummer : **0 143 931**
**B1**

(12) **EUROPÄISCHE PATENTSCHRIFT**

(45) Veröffentlichungstag der Patentschrift :
**15.03.89**

(51) Int. Cl.⁴ : **B 61 D 27/00**

(21) Anmeldenummer : **84111406.9**

(22) Anmeldetag : **25.09.84**

(54) **Einrichtung zur Belüftung und Klimatisierung von Fahrgasträumen in Schienenfahrzeugen.**

(30) Priorität : **01.12.83 DE 3343487**

(43) Veröffentlichungstag der Anmeldung :
**12.06.85 Patentblatt 85/24**

(45) Bekanntmachung des Hinweises auf die Patenterteilung : **15.03.89 Patentblatt 89/11**

(84) Benannte Vertragsstaaten :
**AT CH DE FR GB IT LI SE**

(56) Entgegenhaltungen :
**EP--A-- 0 061 152**
**AT--B-- 369 332**
**DE--A-- 2 658 882**
**DE--B-- 2 103 920**

(73) Patentinhaber : **Messerschmitt-Bölkow-Blohm Gesellschaft mit beschränkter Haftung**
**Robert-Koch-Strasse**
**D-8012 Ottobrunn (DE)**

(72) Erfinder : **Christian, Günther, Dr.**
**Ludwig-Thoma-Strasse 71**
**D-8013 Haar (DE)**

## Beschreibung

Die Erfindung bezieht sich auf eine Einrichtung zur Belüftung und Klimatisierung von Fahrgasträumen in Schienenfahrzeugen gemäß dem Oberbegriff des Patentanspruches 1.

Bei Schienenfahrzeugen, insbesondere bei Zügen für Fernverbindungen, werden die Fahrgasträume heutzutage mehr und mehr mit Hilfe von Klimaanlagen belüftet und klimatisiert, um in den Fahrgasträumen eine gleichmäßige Temperatur und einen gleichmäßigen, jedoch nicht störenden Luftdurchfluß aufrechtzuerhalten. Die hierzu notwendige Klimaanlage weist neben einem Gebläse und einer Temperatursteuerung einen Frischlufteinlaß in den Fahrgastraum und zumindest einen Luftauslaß aus dem Fahrgastraum auf.

Es wird weltweit angestrebt, derartige Schienenfahrzeuge mit höheren Geschwindigkeiten laufen zu lassen, um in inländischen Fernverbindungen unter anderem die Konkurrenz von Flugzeugen abzuwehren. Bei solchen vorhandenen und geplanten Hochgeschwindigkeits-Schienenfahrzeugen werden jedoch die auf die Fahrzeuge einwirkenden aerodynamischen Störungen gravierend und wirken auch in den Fahrgasträumen. So sind vor allem die Druckstöße bei Zugbenegnungen und bei Tunneldurchfahrten so hoch, daß Fahrgäste in solchen schnellfahrenden Schienenfahrzeugen hohen Druckgradienten ausgesetzt werden, die für die Fahrgäste unangenehm sind und den Fahrkomfort mindern.

Hinzu kommt, daß diese Druckstöße sehr plötzlich auftreten und daher von den Fahrgästen als besonders unangenehm empfunden werden. Um einen gleichmäßigen Fahrkomfort für die Fahrgäste zu gewährleisten, müßten diese Druckstöße extrem schnell kompensiert werden. Bisher werden keine Einrichtungen in der Praxis verwendet, die eine derartige Kompensation ermöglichen.

Der Erfindung liegt die Aufgabe zugrunde, eine Einrichtung der in Rede stehenden Art so auszugestalten, daß auch plötzlich auftretende Druckunterschiede schnell und ohne Verlust des Fahrkomforts kompensiert werden können.

Diese Aufgabe ist gemäß der Erfindung durch die im kennzeichnenden Teil des Patentanspruches 1 angegebenen Merkmale gelöst.

Die Erfindung geht von der Überlegung aus, daß eine solche Kompensation äußerer Druckstöße über eine Regelung mit dem Innendruck des Fahrgastraumes als Regelgröße viel zu langsam ist. Andererseits ist jedoch der Druckgradient in dem Fahrgastraum linear abhängig von der Differenz zwischen der durch den Frischlufteinlaß und den Luftauslaß strömenden Luftdurchflußmenge. Der Druckgradient innerhalb des Fahrgastraumes ist somit quasi verzögerungslos gekoppelt mit dieser Differenz. Hierdurch ist es möglich, den Wert der durch den Luftauslaß strömenden Luftdurchflußmenge — konstante Innentemperatur des Fahrgastraumes vorausgesetzt — zur Bildung eines Sollwertes für die durch den Frischlufteinlaß strömende Luftdurchflußmenge heranzuziehen. Durch eine solche Regelung des Innendruckes des Fahrgastraumes bzw. des Druckgradienten mit einem Sollwert, der in Abhängigkeit der Luftdurchflußmenge durch den Luftauslaß nachgeführt wird, und einem Ist-Wert entsprechend der durch den Frischlufteinlaß strömenden Luftdurchflußmenge können auch plötzlich auftretende Druckstöße quasi verzögerungsfrei kompensiert werden, wenn in dem Frischlufteinlaß eine Blende vorgesehen wird, mit der in Abhängigkeit des Regelsignales schnell der Durchflußquerschnitt in dem Frischlufteinlaß verändert wird.

Der Druckgradient ($\dot{p}_i$) innerhalb des Fahrgastraumes läßt sich in Abhängigkeit der Gaskonstante R, der Temperatur $T_i$ in dem Fahrgastraum, dem Volumen $V_i$ des Fahrgastraumes sowie dem Luftdurchfluß w beim Frischlufteinlaß (in) bzw. beim Luftauslaß (out) darstellen als:

$$\dot{p}_i = \frac{RT_i}{V_i}\,(w_{in} - w_{out}) \qquad\qquad (1)$$

Es ist ersichtlich, daß der Druckgradient verzögerungslos gekoppelt ist mit der Differenz der eintretenden bzw. austretenden Luftdurchflußmengen. Da diese abhängig sind von dem Querschnitt der jeweiligen Ein- bzw. Auslässe sowie der Luftgeschwindigkeit, kann der Druckgradient auch in Abhängigkeit von den Luftgeschwindigkeiten v am Frischlufteinlaß (in) und Luftauslaß (out) dargestellt werden. Bei konstanter Innentemperatur des Fahrgastraumes kann in der obigen Formel (1) der Ausdruck vor der Klammer als Konstante angenommen werden. Damit gilt

$$\dot{p}_i = C_1\,(v_{in} - C_2\,v_{out}) \qquad\qquad (2)$$

$C_1$ und $C_2$ sind Konstanten, wobei in $C_1$ der Ausdruck vor der Klammer in der obigen Formel 1 enthalten ist.

Der Betrag des Druckgradient

$$\dot{p}_i(|\dot{p}_2|)$$

soll einen Maximalwert

$$\left| \dot{p}_{i,\,max} \right|$$

nicht überschreiten. Dieser Maximalwert entspricht einem Druckgradienten, der von den Fahrgästen ohne wesentliche Einbuße des Fahrkomforts noch ertragen wird.

Damit kann ein Sollwert für die Luftgeschwindigkeit $v_{in,\,soll}$ durch den Frischlufteinlaß wie folgt definiert werden :

$$\frac{\dot{p}_i}{C_1} = \left| v_{in} - C_2\, v_{out} \right| = \left| v_{in,\,soll} - C_2\, v_{out} \right| \leqq \left| \frac{\dot{p}_{i_{max}}}{C_1} \right| \qquad (3)$$

bzw. daraus zu

$$0 \leqq v_{in,\,soll} \leqq \left| \frac{\dot{p}_{i_{max}}}{C_1} \right| + C_2\, v_{out} \qquad (4)$$

Aus diesen Beziehungen ist ersichtlich, daß der Druckgradient im Fahrgastinnenraum am schnellsten durch eine Beeinflussung der Luftgeschwindigkeit am Frischlufteinlaß in Abhängigkeit von der Luftgeschwindigkeit am Luftauslaß stabilisiert werden kann, wobei diese Geschwindigkeiten $v_{in}$ und $v_{out}$ vom äußeren, sich unter Umständen schnell ändernden Druck $p_{out}$ abhängen.

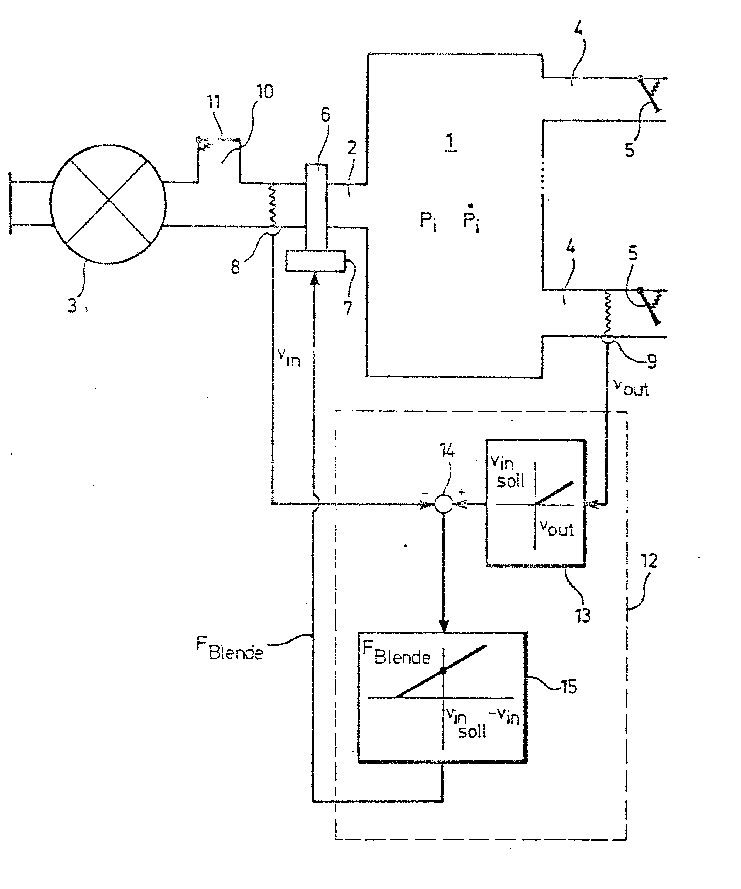

Die Erfindung ist in einem Ausführungsbeispiel anhand der einzigen Figur näher erläutert, in der das Regelsystem zur Regelung des Innendruckes in einem Fahrgastraum eines Schienenfahrzeuges schematisch dargestellt ist.

Mit 1 ist in dieser Darstellung ein Fahrgastraum eines Schienenfahrzeuges bezeichnet, dessen Innendruck $p_i$ möglichst konstant bzw. dessen Druckgradient $\dot{p}_i$ auf Null bzw. minimale, den Fahrtcomfort nicht störende, Werte geregelt werden sollen. In den Fahrgastraum 1 mündet eine Frischlufteinlaßleitung 2, in der ein Klimagerät 3 zur Klimatisierung und Belüftung des Innenraumes angeordnet ist.

Aus dem Fahrgastraum 1 münden mehrere Luftauslässe 4, von denen hier nur zwei gezeigt sind.

Der Außendruck außerhalb des Fahrgastraumes des Schienenfahrzeuges ist mit $p_{out}$ bezeichnet. In den Luftauslässen 4 sind federgestützte Rückschlagklappen 5 vorgesehen, die dann, wenn der Außendurck $p_{out}$ plötzlich ansteigt, die Luftauslässe 4 verschließen, so daß diese Druckstöße nicht oder nur abgeschwächt in den Fahrgastraum 1 gelangen.

Stromabwärts vom Klimagerät 3 ist in dem Frischlufteinlaß 2 eine Blende 6 vorgesehen, mit der der Querschnitt des Frischlufteinlasses 2 verstellt werden kann. Die Blende 6 wird durch einen hier nur angedeuteten Motor 7 betätigt.

In dem Frischlufteinlaß 2 und in einem der Luftauslässe 4 sind Geschwindigkeitssensoren 8 bzw. 9 vorgesehen, mit denen die Luftgeschwindigkeiten $v_{in}$ bzw. $v_{out}$ der durch den Frischlufteinlaß 2 bzw. durch den Luftauslaß 4 strömenden Luft gemessen werden. Der Sensor 8 zur Messung von $v_{in}$ ist zwischen Blende 6 und Klimagerät angeordnet. Zwischen diesem Sensor 8 und dem Klimagerät 3 ist noch eine Abblasleitung 10 vorgesehen, die durch eine federgestützte Überströmklappe 11 nach außen normalerweise abgeschlossen ist.

Zur Messung der Luftgeschwindigkeit $v_{out}$ in den Luftauslässen genügt eine repräsentative Geschwindigkeitsmessung in einem der Luftauslässe, um ein Maß für die Größe des Luftausflusses aus dem Fahrgastraum zu erhalten.

Die Ausgangssignale $v_{in}$ bzw. $v_{out}$ der Geschwindigkeitssensoren 8 bzw. 9 werden einem Regler 12 zugeführt, der durch einen einfachen Mikroprozessor realisiert werden kann. In diesem Mikroprozessor werden die Ausgangssignale der beiden Geschwindigkeitssensoren gemäß den oben angegebenen Gleichungen so behandelt, daß entsprechend obiger Formel (4) ein Sollwert $v_{in,soll}$ für die Lufteintrittsgeschwindigkeit als Funktion der Luftaustrittsgeschwindigkeit $v_{out}$ ermittelt wird. Dies geschieht in einem Funktionsgenerator 13, der in der Figur als separates Teil dargestellt ist, auch wenn ebenso wie die folgenden Elemente alle diese Teile bzw. Elemente in den Mikroprozessor 6 integriert sind. Im vorliegenden Fall wurde

$$\left| \dot{p}_{i\,max} \right| = 0 \text{ angenommen.}$$

Das Ausgangssignal des Funktionsgenerators 13, d. h. der kommandierte Sollwert für die Lufteinlaßgeschwindigkeit $v_{in,soll}$ wird ebenso wie das Ausgangssignal $v_{in}$ des Geschwindigkeitssensors 8 in dem Frischlufteinlaß einem Differenzglied 14 zugeführt, wo aus diesen beiden Größen ein Differenzsignal gebildet wird. Dieses Differenzsignal wird einem Anpaßglied 15 zugeführt, das in Abhängigkeit der Differenz zwischen $v_{in}$ und $v_{in,soll}$ einen Querschnitt F für die Blende 6 festlegt. Aus der Figur ist ersichtlich, daß hier eine lineare Abhängigkeit vorliegt, und daß dann, wenn $v_{in}$ gleich $v_{in,soll}$ ist, die Blende einen mittleren Querschnitt des Frischlufteinlasses freigibt und diesen je nach Verlauf des Regelsignales mehr oder minder öffnet bzw. verschließt. Das Stellsignal $F_{Blende}$ dieses Anpaßgliedes wird dem Motor 7 zugeführt, der die Blende 6 entsprechend verstellt.

Sollte bei dieser Verstellung der Blende der Querschnitt des Frischlufteinlasses stark verkleinert oder gar auf Null gesetzt werden, so muß dafür Sorge getragen werden, daß das Klimagerät 3, welches üblicherweise ein Gebläse enthält, nicht gegen einen zu hohen Widerstand arbeiten muß. Zu diesem Zweck ist die erwähnte Abblasleitung 10 vorgesehen. Wird der Widerstand in dem Frischlufteinlaß zwischen Klimagerät 3 und Blende 6 zu hoch, so wird die Überströmklappe 11 gegen die Federkraft geöffnet, und das Klimagerät kann ohne Überlastung überflüssige Luft nach außen abblasen.

Die Wirkungsweise des dargestellten Systems bei einer Begegnung von zwei Zügen bzw. bei einer Tunneldurchfahrt ist wie folgt :

Bei einer derartigen Begegnung erhöht sich der Außendruck $p_{out}$ schlagartig, wodurch sich ebenso schlagartig die Luftaußlaßgeschwindigkeit $v_{out}$ verringert.

Der Funktionsgenerator 13 in dem Mikroprozessor 6 kommandiert sofort einen niedrigeren Sollwert $v_{in,soll}$. Dieser Wert wird mit der tatsächlichen Luftgeschwindigkeit $v_{in}$ im Frischlufteinlaß verglichen, der vom Klimagerät kommt und durch den erhöhten Außendruck $p_{out}$ möglicherweise leicht ansteigt. Das Differenzsignal $v_{in,soll} - v_{in}$ verschiebt sich daher in Richtung auf negative Werte. Das Anpaßglied 15, ebenfalls ein Funktionsgenerator innerhalb des Mikroprozessors 6, liefert demgemäß ein Signal, das eine kleinere Blendenfläche kommandiert. Der Motor 7 verstellt die Blende 6 demnach so, bis dieser neue Wert erreicht ist, so daß der Querschnitt des Frischlufteinlasses 2 verringert wird. Damit wird auch die effektive Luftmenge, die in den Fahrgastraum 1 durch den Frischlufteinlaß einströmt, durch Reduzierung der Blendenfläche und damit der Luftgeschwindigkeit der durch den Druckstoß kleiner gewordenen Luftaustrittsgeschwindigkeit $V_{out}$ so schnell angepaßt, daß eine merkliche Druckänderung $\dot{p}_i$ in dem Fahrgastraum 1 gar nicht auftreten kann. Sind die Änderungen des Außendruckes $p_{out}$ so groß, daß sich eine Geschwindigkeitsumkehr in den Luftauslässen 4 ergibt, so treten die dort installierten Rückschlagklappen 5 in Aktion, die die Luftauslässe so lange verschließen, so lange der Druckumkehreffekt anhält. Wird in einem solchen Falle die Blende 6 vollständig geschlossen, so wird, wie oben erwähnt, die vom Klimagerät strömende Luft durch die Abblasleitung 10 über die Rückschlagklappe 11 nach außen abgeblasen. Dies hat den Vorteil, daß das Klimagerät selbst nicht beeinflußt werden muß, sondern im schonenden Dauerbetrieb gelassen werden kann. Insgesamt können mit einem derartigen System auch sehr rasche Änderungen des Druckes im Fahrgastraum so schnell auskompensiert werden, daß die Fahrgäste diese äußeren Druckschwankungen praktisch nicht wahrnehmen.

**Patentansprüche**

1. Einrichtung zur Belüftung und Klimatisierung von Fahrgasträumen (1) in Schienenfahrzeugen mit Hilfe einer Klimaanlage (3), die einen Frischlufteinlaß (2) in den Fahrgastraum und zumindest einen Luftauslaß (4) aus dem Fahrgastraum aufweist, dadurch gekennzeichnet, daß zur Regelung des Fahrgastraum-Innendurcks ($p_i$) ein Regler (12) vorgesehen ist, daß im Frischlufteinlaß (2) und in zumindest einem Luftaus laß (4) jeweils Sensoren (8, 9) angeordnet sind, die Ausgangssignale ($v_{in}$, $v_{out}$) in Abhängigkeit der durch den Frischlufteinlaß (2) bzw. durch den Luftauslaß (4) strömenden Luftdurchflußmengen ($w_{in}$, $w_{out}$) abgeben, daß ein Sollwertgeber (13) vorgesehen ist, dem das Ausgangssignal ($v_{out}$) des Sensors (9) im Luftauslaß (4) zugeführt ist und der einen von diesem Ausgangssignal abhängigen Sollwert ($v_{in,soll}$) für die durch den Frischlufteinlaß (2) strömende Luftdurchflußmenge liefert, daß der Ausgang des Sollwertgebers (13) und derjenige des Sensors (9) im Frischlufteinlaß (2) mit einem Differenzglied (14) zur Bildung eines Stellsignales ($F_{Blende}$) verbunden sind, und daß mit dem Ausgang dieses Differenzgliedes (14) als Stellglied (6, 7) in dem Lufteinlaß (6) eine dessen Durchflußquerschnitt verändernde Blende (6) vorgesehen ist.

2. Einrichtung nach Anspruch 1, dadurch gekennzeichnet, daß die Sensoren (8, 9) Geschwindigkeitssensoren zur Messung der Lufteintritts- bzw. Luftaustrittsgeschwindigkeiten ($v_{in}$, $v_{out}$) sind, und daß der Sollwertgeber (13) als Sollwert eine Soll-Luftgeschwindigkeit ($v_{in,soll}$) für die Lufteintrittsgeschwindigkeit im Lufteinlaß (2) liefert.

3. Einrichtung nach Anspruch 1 oder 2, dadurch gekennzeichnet, daß der Sollwert ($v_{in,soll}$) linear von dem Ausgangssignal ($v_{out}$) des Sensors (9) im Luftauslaß (4) abhängt, wobei negative Sollwerte ausgeschlossen sind.

4. Einrichtung nach einem der vorhergehenden Ansprüche, dadurch gekennzeichnet, daß das Differenzglied (14) mit einem Anpaßglied (15) verbunden ist, daß das vom Differenzglied abgegebene Regelsignal ($v_{in,soll} - v_{in}$) in ein um einen Mittelwert nach beiden Seiten linear verlaufendes Stellsignal ($F_{Blende}$) für den Durchflußquerschnitt der Blende (6) umwandelt.

5. Einrichtung nach einem der vorhergehenden Ansprüche, dadurch gekennzeichnet, daß zur Verstellung der Blende (6) ein mit dem Stellsignal beaufschlagbarer Motor (7) vorgesehen ist.

6. Einrichtung nach einem der vorhergehenden Ansprüche, dadurch gekennzeichnet, daß die Blende (6) in dem Frischlufteinlaß (2) stromabwärts von dem Sensor (8) angeordnet ist.

7. Einrichtung nach einem der vorhergehenden Ansprüche, dadurch gekennzeichnet, daß in den Luftauslässen (4) gegen Druckstöße von außen wirkende Rückschlagklappen (5) vorgesehen sind.

8. Einrichtung nach einem der vorhergehenden Ansprüche, dadurch gekennzeichnet, daß im Frischlufteinlaß (2) stromaufwärts vom Sensor (8) zwischen diesem und einem Klimagerät (3) der Klimaanlage eine Abblasleitung (10) vorgesehen ist, die durch ein Überströmventil (11) abgeschlossen ist.

**Claims**

1. Arrangement for the ventilating and air-conditioning of passenger compartments (1) in rail vehicles with the aid of an air-conditioning installation (3), which has a fresh-air inlet (2) into the passenger compartment and at least one air outlet (4) from the passenger compartment, characterised in that a regulator (12) is provided for regulating the internal pressure ($P_i$) of the passenger compartment, in that arranged in the fresh-air inlet (2) and in at least one air outlet (4) are respectively sensors (8, 9) which emit output signals ($v_{in}$, $v_{out}$) as a function of the rates of air flow ($w_{in}$ $w_{out}$) flowing through the fresh-air inlet (2) or respectively through the air outlet (4) in that a desired-value transmitter (13) is provided to which the output signal ($v_{out}$) of the sensor (9) in the air outlet (4) is supplied and which supplies a desired value ($v_{in}$, desired), dependent upon this output signal, for the rate of air flow flowing through the fresh-air inlet (2), in that the output of the desired-value transmitter (13) and that of the sensor (9) in the fresh-air inlet (2) are connected to a difference member (14) for the formation of an adjusting signal ($F_{diaphragm}$) and in that provided with the output of this difference member (14) as adjusting member (6, 7) in the air inlet (2) is a diaphragm (6) which varies the flow cross-section thereof.

2. Equipment according to claim 1, characterised in that the sensors (8, 9) are velocity sensors for the measurement of the air-intake or respectively air-exhaust velocities ($v_{in}$, $v_{out}$), and in that the desired-value transmitter (13) supplied as desired value a desired air velocity ($v_{in,desired}$) for the air-intake velocity in the air inlet (2).

3. Equipment according to claim 1 or 2, characterised in that the desired value ($v_{in,desired}$) depends linearly upon the output signal ($v_{out}$) of the sensor (9) in the air inlet (4), in which respect negative desired values are precluded.

4. Equipment according to one of the preceding claims, characterised in that the difference member (14) is connected to an adapting member (15) which converts the control signal ($v_{in,desired}$) emitted by the difference member into an adjusting signal ($F_{diaphragm}$), extending linearly to both sides about a mean value, for the flow cross-section of the diaphragm (6).

5. Equipment according to one of the preceding claims, characterised in that a motor (7) which can be acted upon with the adjusting signal is provided for the adjustment of the diaphragm (6). ·

6. Equipment according to one of the preceding claims, characterised in that the diaphragm (6) is arranged in the fresh-air inlet (2) downstream of the sensor (8).

7. Equipment according to one of the preceding claims, characterised in that non-return valves (5) acting against pressure surges from the outside are provided in the air outlets (4).

8. Equipment according to one of the preceding claims, characterised in that provided in the fresh-air inlet (2) upstream of the sensor (8) between this and an air-conditioner (3) of the air-conditioning installation is a blow-off line (10) which is closed off by an overflow valve (11).

**Revendications**

1. Dispositif pour l'aération et le conditionnement d'air d'habitacles (1) dans des véhicules sur rails à l'aide d'une installation de conditionnement d'air (3) comprenant une prise d'air frais (2) vers l'habitacle et au moins une sortie d'air vicié (4) de l'habitacle, caractérisé en ce qu'il est prévu un régulateur (12) pour la régulation de la pression intérieure ($p_i$) de l'habitacle, que dans la prise d'air frais (2) et dans au moins une sortie d'air vicié (4) sont disposés des capteurs (8, 9) qui émettent des signaux de sortie ($v_{in}$, $v_{out}$) en fonction des quantités d'air ($w_{in}$, $w_{out}$) s'écoulant à travers la prise d'air frais (2) ou la sortie d'air vicié (4), qu'il est prévu un émetteur (13) de valeur de consigne auquel est amené le signal de sortie ($v_{out}$) du capteur (9) dans la sortie d'air vicié (4) et qui fournit une valeur de consigne ($v_{in}$, soll), dépendant de ce signal de sortie, pour la quantité d'air s'écoulant à travers la prise d'air frais (2), que les sorties de l'émetteur (13) de valeur de consigne et du capteur (9) dans la prise d'air frais (2) sont reliées à un comparateur (14) en vue de la génération d'un signal de commande ($F_{Blende}$) et qu'à la sortie de ce comparateur (14) il est prévu dans la prise d'air (6) un obturateur (6) en tant qu'organe de commande (6, 7) qui modifie la section d'écoulement de la prise.

2. Dispositif selon la revendication 1, caractérisé en ce que les capteurs (8, 9) sont des capteurs de vitesse destinés à mesurer les vitesses d'entrée et de sortie de l'air ($v_{in}$, $v_{out}$) et que l'émetteur (13) de valeur de consigne fournit comme valeur de consigne une vitesse de consigne ($v_{in,soll}$) pour la vitesse d'entrée de l'air dans la prise d'air (2).

3. Dispositif selon la revendication 1 ou 2, caractérisé en ce que la valeur de consigne ($v_{in,soll}$) dépend de façon linéaire du signal de sortie ($v_{out}$) du capteur (9) dans la sortie d'air (4), des valeurs de consigne négatives étant exclues.

4. Dispositif selon l'une quelconque des revendications précédentes, caractérisé en ce que le comparateur (14) est relié à un organe d'ajustage (15) qui convertit le signal de régulation ($v_{in,soll}$-$v_{in}$) émis par le comparateur en un signal de commande ($F_{Blende}$), s'étendant de façon linéaire vers les deux côtés autour d'une valeur moyenne, pour la section d'écoulement de l'obturateur (6).

5. Dispositif selon l'une quelconque des revendications précédentes, caractérisé en ce qu'un moteur (7), pouvant être sollicité par le signal de commande, est prévu pour le réglage de l'obturateur (6).

6. Dispositif selon l'une quelconque des revendications précédentes, caractérisé en ce que l'obturateur (6) est disposé en aval du capteur (8) dans la prise d'air frais (2).

7. Dispositif selon l'une quelconque des revendications précédentes, caractérisé en ce que dans les sorties d'air (4) il est prévu des clapets anti-retour (5) qui agissent contre des pressions subites venant de l'extérieur.

8. Dispositif selon l'une quelconque des revendications précédentes, caractérisé en ce que dans la prise d'air frais (2) il est prévu en amont du capteur (8), entre celui-ci et un appareil de conditionnement d'air (3) de l'installation de conditionnement d'air, une conduite d'échappement (10) qui est fermée par une soupape de décharge (11).